# FASCICULE DE BREVET EUROPEEN

(11) **EP 4 028 645 B1**
(45) Date de publication et mention de la délivrance du brevet: **25.03.2026**
(21) Numéro de dépôt: 20786004.0
(22) Date de dépôt: 09.09.2020
(51) Int. Cl.: F01D 11/12

(54) **FIXATION D'UNE VIROLE ACOUSTIQUE A UNE ENVELOPPÉ DE CARTER POUR UNE TURBOMACHINE D'AÉRONEF**
BEFESTIGUNG EINER AKUSTISCHEN ABSCHIRMUNG AN EINER GEHÄUSESCHALE EINES FLUGZEUGTRIEBWERKS
ATTACHMENT OF AN ACOUSTIC SHROUD TO A HOUSING SHELL FOR AN AIRCRAFT TURBINE ENGINE

(30) Priorité: 10.09.2019 FR 1909947
(43) Date de publication de la demande: 20.07.2022
(73) Titulaire: SAFRAN AIRCRAFT ENGINES, 75015 Paris (FR)
(72) Inventeur: DUPAYS, Thomas, 77550 MOISSY-CRAMAYEL (FR); BOUROLLEAU, Clément, 77550 MOISSY-CRAMAYEL (FR); POULENC, Coline, 77550 MOISSY-CRAMAYEL (FR); SIRAJ, Anwer, 77550 MOISSY-CRAMAYEL (FR)
(74) Mandataire: Gevers & Orès
(86) Numéro de dépôt international: PCT/FR2020/000236
(87) Numéro de publication internationale: WO 2021/048473

(56) Documents cités:
- WO-A1-2014/068261
- FR-A1- 3 011 033
- FR-A1- 3 059 362

## Description

### Domaine technique de l'invention

La présente invention concerne la réalisation d'un carter, en particulier de soufflante, pour une turbomachine d'aéronef, et en particulier la fixation d'une virole acoustique à une enveloppe de carter.

### Arrière-plan technique

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

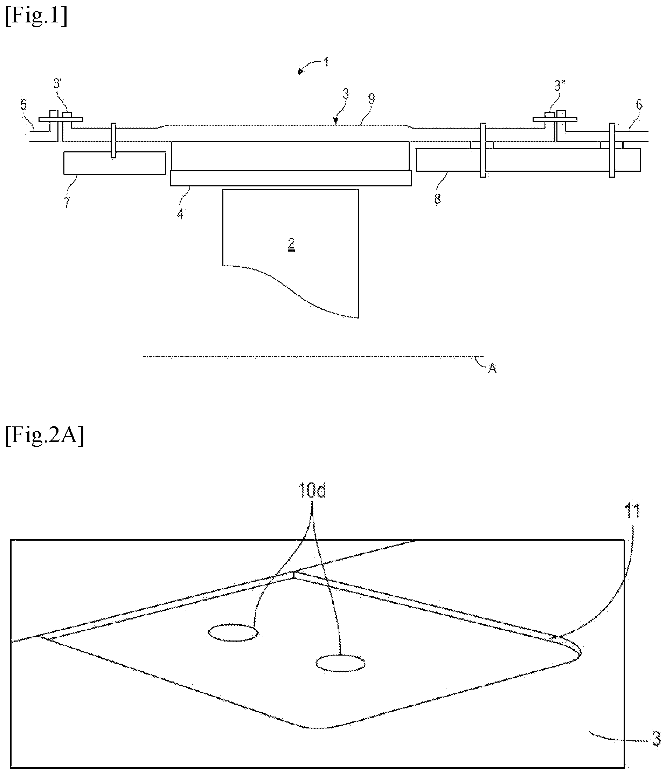

La figure 1 représente partiellement et schématiquement une soufflante 1 d'une turbomachine d'aéronef.

La soufflante 1 comporte une roue à aubes 2 qui est entourée par un carter 3 de soufflante, encore appelé carter de rétention du fait de sa fonction de rétention des aubes en cas de rupture de celles-ci, ou en cas d'entrée de débris dans la soufflante.

Le carter de soufflante 3 comprend typiquement une enveloppe annulaire 9 d'axe de révolution A qui s'étend autour des aubes de soufflante 2 de la turbomachine. Cette enveloppe comprend une bride annulaire de fixation 3', 3" à chacune de ses extrémités axiales. Ces brides 3', 3" sont utilisées pour fixer le carter 3 à des parois annulaires de la nacelle de la turbomachine.

Le carter de soufflante 3 est lié, à l'amont, à une manche d'entrée d'air 5, et, à l'aval, à une virole 6 de carter intermédiaire.

Le carter comporte également une virole acoustique amont 7 (aussi appelée OPB pour One Piece Barrel, ce qui signifie « fût en une pièce ») et des panneaux acoustiques aval 8. Le carter de soufflante 3 comporte encore une couche annulaire 4 de matière abradable, positionnée sur une surface annulaire interne de l'enveloppe, entre l'OPB 7 et les panneaux aval 8.

En plus de la fonction de rétention, le carter de soufflante 3 est également conçu pour :
- assurer une continuité mécanique (des efforts et des moments) entre la manche d'entrée d'air 5 et la virole 6 de carter intermédiaire ;
- permettre la fixation des panneaux de veine (OPB 7, panneau acoustique 8 et couche de matière abradable 4),
- permettre la fixation d'équipements et de supports ;
- tenir les spécifications de règlementation au feu et aux fuites ;
- permettre une continuité du courant électrique pour la tenue à la foudre, etc.

L'OPB 7 est par exemple en matériau composite tandis que l'enveloppe 9 peut être en matériau composite ou métallique.

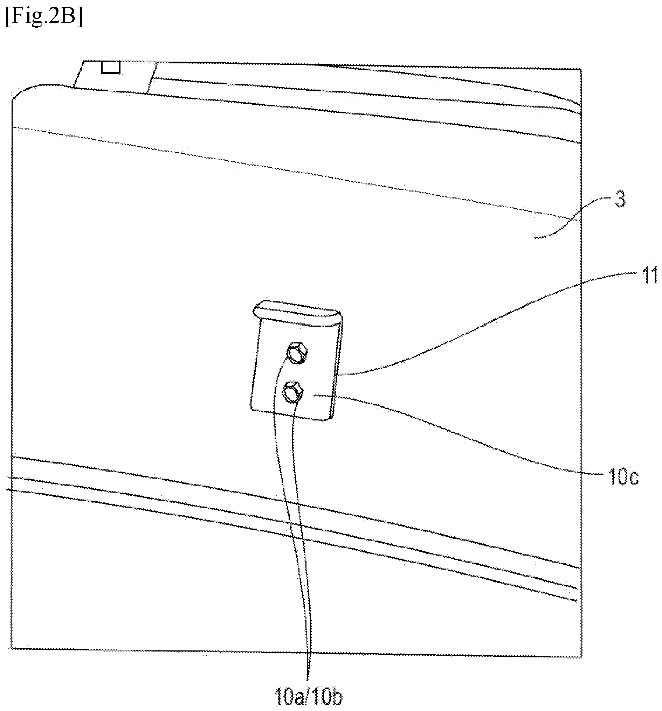

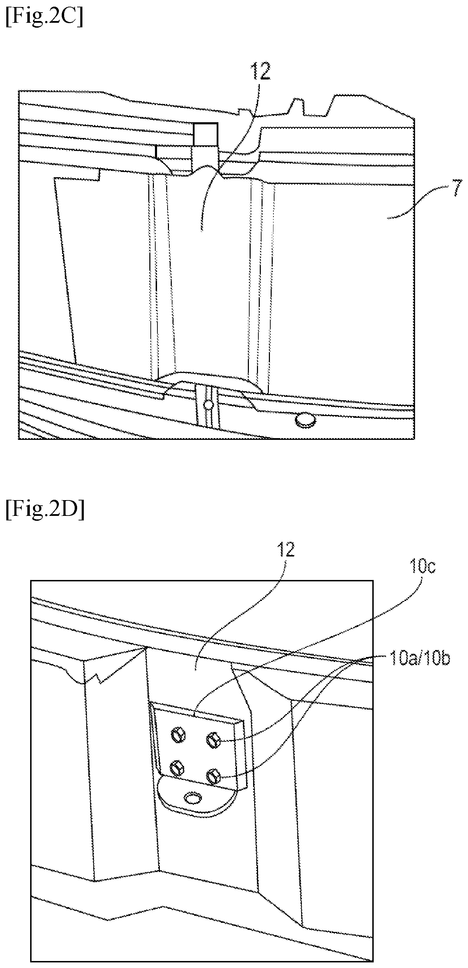

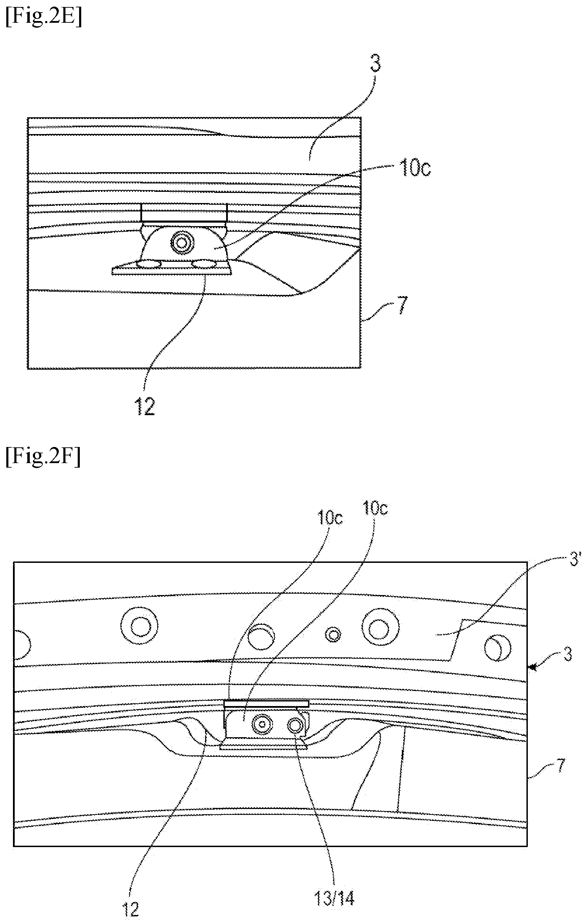

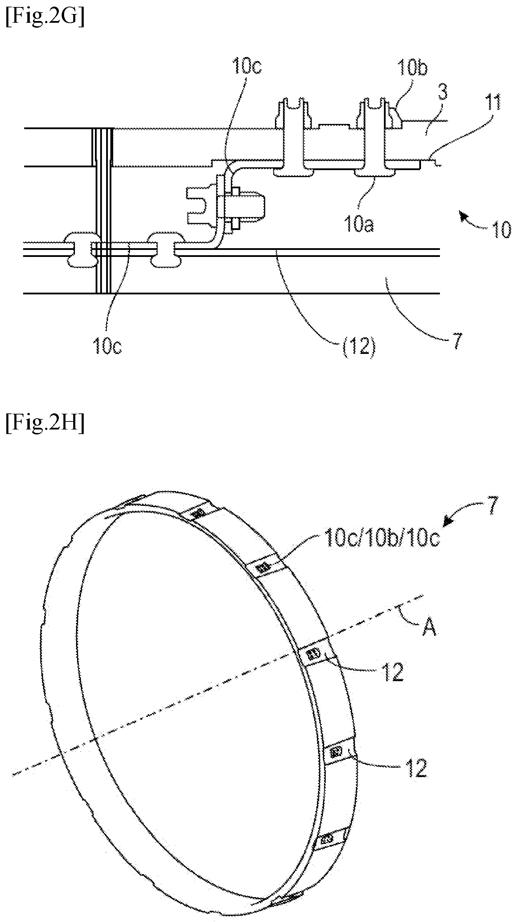

Les figures 2a à 2h illustrent par exemple un système de fixation connu 10 de l'OPB 7 sur l'enveloppe 9 par liaison boulonnée (vis 10a, écrous 10b, pièces de liaison en L 10c reliées l'une à l'autre selon un assemblage enforme de S, alésages 10d destinés à loger les vis 10a). Ce système de fixation 10 nécessite de prévoir des géométries structurelles et des usinages spécifiques sur chacun des composants à assembler, tels que des lamages 11 prévus sur les surfaces internes de l'enveloppe 9 (figures 2A et 2B) et des rainures longitudinales 12 dans l'OPB 7 pour ménager de la place aux pièces de liaisons 10c (figures 2C et 2D). Le système de fixation 10 assemblé est illustré dans une première version standard en figure 2E et dans une variante dite de positionnement comportant par exemple un couple pion 13 / orifice 14 sur les pièces de liaison 10c respectives en figure 2F. Une vue schématique du système de liaison de la figure 2E est encore illustrée en élévation et en coupe longitudinale en figure 2G. Un exemple d'OPB 7 ainsi existant sur lequel des rainures 12 sont ménagées et des éléments 10a, 10b et 10c du système de fixation 10 sont montés est encore illustré en figure 2H.

Les géométries et usinages particuliers altèrent les propriétés mécaniques de l'enveloppe 9 et les propriétés acoustiques de l'OPB 7. De plus, le système de fixation 10 peut être source de concentrations de contraintes puisqu'il est « fortement » hyperstatique (les six degrés de liberté - translations et rotations - sont supprimés plusieurs fois), ce qui le fragilise.

Afin de pallier ce problème il est nécessaire de simplifier les géométries et la liaison entre l'OPB 7 et l'enveloppe 9.

Le document FR 3059362 A1 décrit un carter de turbomachine comportant une structure d'isolation acoustique annulaire à l'intérieur de laquelle un élément abradable est fixé.

Le document FR 3011033 A1 décrit un procédé de réalisation d'un carter de turbomachine par fabrication individuelle de secteurs pourvus chacun d'un support et d'un élément abradable.

L'invention propose donc notamment un procédé de fabrication d'un carter pour turbomachine d'aéronef, ainsi qu'un carter de turbomachine d'aéronef amélioré. Le carter doit notamment être simple de conception et d'installation, économique et facile à fabriquer.

### Résumé de l'invention

L'invention concerne ainsi un procédé de fabrication d'un carter de turbomachine d'aéronef, le carter comportant :
- une enveloppe annulaire s'étendant autour d'un axe A ;
- un élément annulaire, fixé sur une surface intérieure de l'enveloppe, l'élément annulaire comportant un corps qui est en matériau à alvéoles de type NIDA et qui comprend une partie aval présentant une première surface intérieure recouverte d'une couche de matière abradable, et une partie amont présentant une seconde surface intérieure exempte de matière abradable, le corps s'étendant de manière continue de la partie amont à la partie aval.

Selon l'invention, le procédé de fabrication comporte :
- une étape de fabrication de l'élément annulaire sous forme d'un corps annulaire continu,
- une étape de découpage du corps annulaire continu en secteurs de corps,
- une étape de fixation des secteurs de corps sur la surface intérieure de l'enveloppe, et
- une étape de dépôt d'une couche de matière abradable sur la surface intérieure de la partie aval du corps.

Grâce à cela, le carter combine en un seul élément annulaire une fonction d'atténuation acoustique et une fonction d'abradabilité, ce qui permet par exemple de limiter les coûts de production grâce à une pièce unique, là ou l'art antérieur prévoit deux pièces (virole acoustique amont et couche ou cartouche support abradable).

En outre, le procédé de fabrication de l'élément annulaire sous forme d'un corps annulaire continu avant découpage en secteurs d'anneaux offre les avantages suivants :
- le coût de fabrication d'une unique pièce est limité par rapport à celui de la production individuelle de plusieurs secteurs d'anneaux,
- le collage de secteurs d'anneaux est plus simple que celui d'un anneau intégral.

Le procédé selon l'invention peut comprendre une ou plusieurs des caractéristiques suivantes, considérées indépendamment les unes des autres ou en combinaison les unes avec les autres :
- l'étape d'installation des secteurs d'anneau sur la surface intérieure de l'enveloppe comprend une étape de comblement d'interstices entre les secteurs d'anneau par un matériau abradable de comblement ;
- le matériau de comblement est une résine comportant une charge sous forme de billes creuses, de préférence une résine comportant une charge sous forme de billes creuses en verre, de préférence encore une résine époxyde chargée de microsphères creuses en verre ;
- le matériau abradable de comblement des interstices est le même matériau abradable que le matériau composant la couche de matériau abradable ;
- au niveau de la partie aval, la couche de matériau abradable vient de corps avec le matériau de comblement.

L'invention porte encore sur un carter de turbomachine d'aéronef fabriqué suivant le procédé de l'une des revendications 3 à 6.

Le carter selon l'invention peut comprendre une ou plusieurs des caractéristiques suivantes, considérées indépendamment les unes des autres ou en combinaison les unes avec les autres :
- l'élément annulaire est fixé par collage sur la surface intérieure de l'enveloppe,
- la couche de matière abradable est disposée dans un renfoncement de la partie aval du corps,
- la couche abradable présente une surface intérieure qui s'étend dans le prolongement axial de la seconde surface intérieure,
- un film ou tissu, par exemple stratifié, à base de fibres recouvre les première et seconde surfaces intérieures du corps en matière à alvéoles, le film étant lui-même recouvert par la couche de matière abradable au niveau de la première surface intérieure,
- la partie aval du corps a une dimension axiale supérieure à celle de la partie amont,
- la couche abradable a une épaisseur radiale mesurée par rapport audit axe A qui représente entre 2 et 20% de l'épaisseur radiale dudit corps,
- l'enveloppe est réalisée dans un matériau composite comportant des fibres tissées et noyées dans une résine,
- le nombre de secteurs du corps est compris entre deux et dix.

La fixation par collage de l'élément annulaire sur l'enveloppe est particulièrement simple, apporte de la raideur au carter, permet de s'affranchir de liaisons mécaniques par pièces métalliques et permet donc une réduction de la masse du carter, et permet d'épaissir la partie amont de l'élément annulaire de manière à améliorer ses propriétés d'atténuation acoustique.

L'invention porte encore sur une turbomachine d'aéronef, comportant un carter de turbomachine d'aéronef selon la revendication précédente.

Les caractéristiques suivantes peuvent également être mises en œuvre dans l'invention :
- une surface extérieure du corps en matériau isolant, opposée radialement aux surfaces intérieures, est exempte de film ou tissu à base de fibres ;
- la couche de matériau abradable est prévue pour être disposée en regard d'extrémités des aubes d'un stator de la turbomachine d'aéronef.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 déjà décrite montre partiellement une vue en coupe d'une soufflante d'une turbomachine d'aéronef selon l'état de la technique ;
[Fig.2A] La figure 2A déjà décrite montre une vue en perspective d'un lamage prévu sur une surface interne d'un carter composite selon l'état de la technique ;
[Fig.2B] La figure 2B déjà décrite montre une pièce de fixation en L montée dans le lamage illustré en figure 2A selon l'état de la technique ;
[Fig.2C] La figure 2C déjà décrite montre une rainure prévue sur une surface extérieur de virole acoustique amont selon l'état de la technique ;
[Fig.2D] La figure 2D déjà décrite montre une pièce de fixation en L montée dans la rainure de la figure 2C et devant être accrochée à la pièce de fixation en L de la figure 2B selon l'état de la technique ;
[Fig.2E] La figure 2E déjà décrite montre un système de fixation des pièces en L telles que celles des figures 2B et 2D, celles-ci étant fixées l'une à l'autre ;
[Fig.2F] La figure 2F déjà décrite illustre une variante dite de positionnement du système de fixation de la figure 2E ;
[Fig.2G] La figure 2G déjà décrite montre le système de fixation de la figure 2E en élévation et en coupe longitudinale ;
[Fig.2H] La figure 2H déjà décrite montre une virole acoustique amont pourvue de rainures et d'éléments du système de fixation de la figure 2E.
[Fig.3] La figure 3 montre en perspective une virole selon l'invention, ici exempte d'une couche en matériau abradable ;
[Fig.4] La figure 4 est une vue en coupe montrant partiellement une soufflante d'une turbomachine d'aéronef, la soufflante comportant la virole selon la figure 3 ;
[Fig.5] La figure 5 est un agrandissement d'une partie avant de la figure 4 ;
[Fig.6] La figure 6 est une vue schématique en coupe transversale selon les repères VI de la figure 4.

### Description détaillée de l'invention

Dans la description qui suit, l'invention est appliquée à un carter de soufflante 23, par exemple analogue au carter 3 de soufflante représenté en figure 1. L'invention n'est toutefois pas limitée à ce type de carter et peut être appliquée à d'autres carters d'une turbomachine.

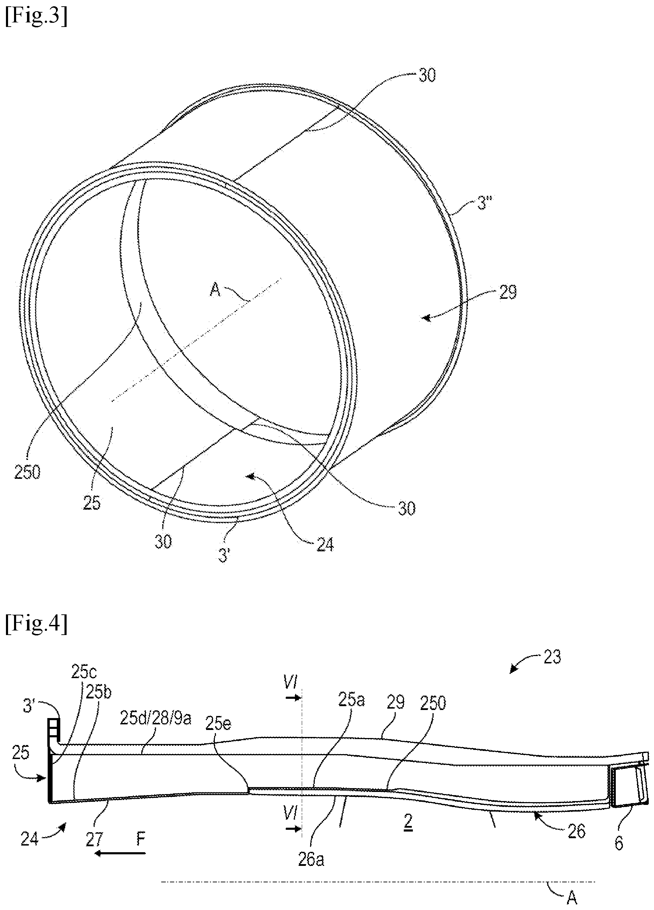

Le carter 23 auquel l'invention s'applique a une forme générale annulaire autour d'un axe A (voir par exemple en figure 4). Une flèche F matérialise une orientation avant-arrière des éléments illustrés eu égard à leur orientation une fois installés dans la turbomachine.

Le carter 23 comprend :
- une enveloppe annulaire 29 s'étendant autour de l'axe A et réalisée dans un matériau composite comportant des fibres tissées et noyées dans une résine, et
- une virole 24 prévue et configurée pour être disposée à l'intérieur de l'enveloppe 29 dans un état dit installé, et pour recouvrir une surface annulaire intérieure 29a d'un tronçon avant de l'enveloppe 29 (figure 4).

La virole 24 comporte un corps principal 25 en matériau isolant acoustique, formant module d'isolation acoustique, ou module d'atténuation acoustique, et une couche de matériau abradable 26.

Le corps principal 25 comporte une partie amont 251 et une partie aval 252. Les parties amont 251 et aval 252 s'étendent de manière continue l'une avec l'autre. La partie aval 252 présente une première surface intérieure 25a et la partie amont 251 présente une deuxième surface intérieure 25b.

Le corps 25 présente, de manière continue dans cet ordre, la première surface intérieure 25a, un épaulement 25e, la deuxième surface intérieure 25b, un bord annulaire amont 25c, une surface extérieure 25d.

Les première et deuxième surfaces intérieure 25a et 25b sont annulaires et s'étendent longitudinalement autour de l'axe A. La deuxième surface intérieure 25b est prévue à l'avant, ou à l'amont, de la première surface intérieure 25a selon l'orientation avant-arrière F prévue de la virole 24 une fois installée dans la turbomachine 1. Le passage de la première surface intérieure 25a à la deuxième surface intérieure 25b est assuré par l'épaulement 25e vers l'intérieur, c'est-à-dire que ce passage correspond localement à une réduction du diamètre de la section intérieure du corps 25. La première surface intérieure 25a forme ainsi avec l'épaulement 25e un renfoncement 250 vers l'extérieur par rapport à la deuxième surface intérieure 25b (figures 3 et 4).

La couche de matériau abradable 26 est formée sur le corps principal 25. Plus précisément, la couche de matériau abradable 26 est prévue dans le renfoncement 250, de manière à recouvrir la première surface intérieure 25a du corps principal 25. De préférence, la couche de matériau abradable 26 est conformée de sorte qu'une surface intérieure 26a de celle-ci vienne au droit de la deuxième surface intérieure 25b, c'est-à-dire que la surface intérieure 26a de la couche abradable 26 s'étende dans le prolongement axial de la seconde surface intérieure 25b.

Le corps principal 25 comporte un matériau à alvéoles, les alvéoles (non illustrées) étant disposées selon une structure en nid d'abeilles. Un tel matériau est également connu sous le nom de NIDA. Le corps principal 25 comporte encore au moins un film 27, ou tissu par exemple stratifié, à base de fibres, de préférence à base de fibres de carbone. De préférence, le corps 25 comporte plusieurs films 27 superposés par drapage. Pour une raison de lisibilité, il ne sera fait mention que d'un film 27 ci-dessous.

Le film 27 à base de fibres recouvre les première et seconde surfaces intérieures 25a et 25b du corps 25. Le film 27 est lui-même recouvert par la couche de matière abradable 26 au niveau de la première surface intérieure 25a, c'est-à-dire dans le renfoncement 250. De préférence, le film 27 est plié à l'amont et recouvre également le bord annulaire amont 25c du corps 25. De préférence, la surface extérieure 25d du corps 25, qui est opposée radialement aux surfaces intérieures 25a, 25b, est exempte de film à base de fibres 27. Cette dernière caractéristique peut contribuer fortement à la limitation de la masse de la virole 24 et limite le temps de drapage du corps 25.

La virole 24 est collée dans l'enveloppe 29, c'est-à-dire sur une surface intérieure 29a de l'enveloppe 29. Une épaisseur de colle 28 est ainsi disposée entre la virole 24 et l'enveloppe 29 (figure 4). L'épaisseur de colle 28 est par exemple, non limitativement, appliquée en film sur la surface extérieure 25d de secteurs de corps 253, 254 ou secteurs d'anneau composant la virole 24 (voir plus loin le détail des secteurs 253, 254). La virole 24 est ensuite disposée dans l'enveloppe 29 et l'ensemble est chauffé, par exemple en autoclave, pour provoquer le collage des secteurs de corps 253, 254 sur la surface 29a. Une pression est de préférence appliquée sur la virole 24 pour qu'elle soit bien plaquée contre la surface 29a lors du chauffage.

De préférence, la virole 24 est fabriquée sous forme d'un corps annulaire continu, c'est-à-dire que la virole 24 est une pièce s'étendant sur 360 degrés à l'issue de la fabrication de celle-ci. La virole 24 est de préférence ensuite découpée en secteurs d'anneaux qui peuvent ensuite être installés sur la surface intérieure 29a de l'enveloppe 29.

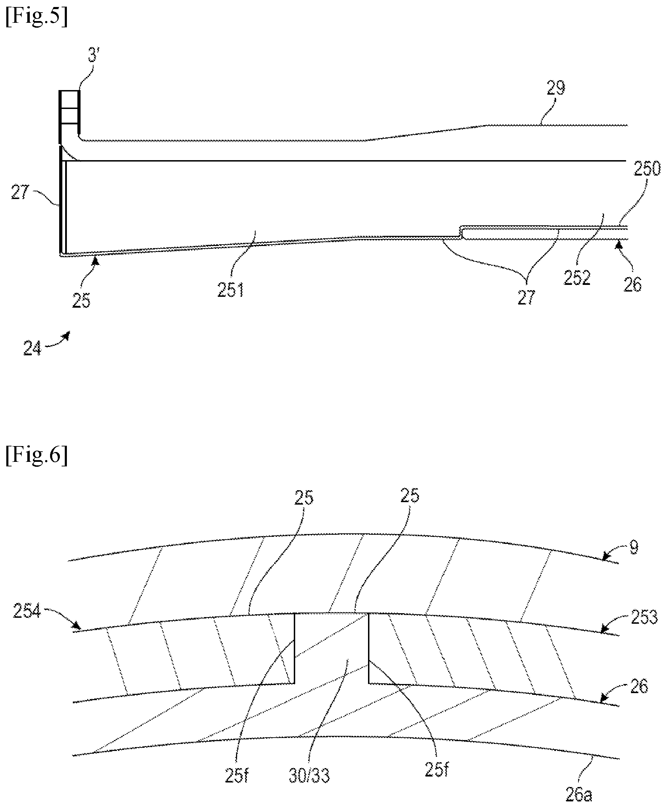

Le nombre de secteurs d'anneaux peut être par exemple compris entre deux et dix. La virole illustrée en figures 3 et 6 présente par exemple, non limitativement deux secteurs d'anneaux 253 et 254. Un tel procédé de fabrication d'une virole sous forme d'un corps annulaire continu avant découpage en secteurs d'anneaux offre les avantages suivants :
- le coût de fabrication d'une unique pièce est limité par rapport à celui de la production individuelle de plusieurs secteurs d'anneaux,
- le collage de secteurs d'anneaux est plus simple que celui d'un anneau intégral.

Une fois les secteurs d'anneaux 253, 254 collés contre la surface 29a, des interstices 30 peuvent apparaître entre les secteurs 253, 254, plus précisément entre des extrémités 25f de chaque secteur 253 et 254 (figures 3 et 6). Ces interstices 30 sont à la fois le résultat du découpage des secteurs 253, 254 et d'un jeu souhaité pour l'installation aisée des secteurs 253, 254 dans l'enveloppe 29.

Les interstices 30 sont de préférence comblés par un matériau de comblement ou de recouvrement 33 (figure 6). Le matériau de comblement 33 est de préférence un matériau abradable, tel que le matériau abradable composant la couche 26, y compris au niveau du module d'isolation ou d'atténuation acoustique en avant de la couche 26.

Le matériau abradable de la couche 26 et/ou le matériau de comblement 33 est/sont une résine comportant une charge sous forme de billes creuses (par exemple en verre). Le matériau abradable peut être une résine époxyde chargée de microsphères de verre creuses (par exemple celle commercialisée sous la référence DMR76-059, Scotch-Weld EC-3524 B/A Black).

On note qu'en figure 6, et plus généralement au niveau de la partie aval 252, la couche de matériau abradable 26 vient de corps avec le matériau de comblement 33.

L'invention apporte des avantages à plusieurs niveaux. D'un point de vue technique, notamment d'un point de vue mécanique :
- l'enveloppe de carter ne subit pas d'usinage, par exemple du type des lamages de l'art antérieur. L'intégrité du matériau composite de l'enveloppe n'est donc pas altérée et la continuité des fibres dans celle-ci est préservée, ce qui évite la concentration de contraintes dans l'enveloppe ;
- l'interface génératrice de perturbations aérodynamiques entre l'OPB et la couche de matériau abradable de l'art antérieur est supprimée ;
- la liaison par collage de la virole sur l'enveloppe augmente la raideur d'ensemble du carter et améliore le comportement vibratoire général de celui-ci et de la turbomachine ;
- la liaison par collage précitée est de type surfacique à la différence des liaisons ponctuelles de l'art antérieur, ce qui limite les contraintes mécaniques au fonctionnement ;
- la suppression des liaisons métalliques, du pli carbone de la face extérieure du module d'isolation acoustique, du chant aval de l'OPB et du chant amont de la couche de support du matériau abradable s'accompagnent d'un gain de masse.

D'un point de vue acoustique :
- la suppression des liaisons métalliques permet de s'affranchir des rainures afférentes dans le corps du module d'atténuation acoustique, permettant ainsi au matériau d'isolation acoustique comprenant la structure à nid d'abeilles de présenter une hauteur constante de manière azimutale, c'est-à-dire sur l'ensemble de la circonférence du module d'isolation acoustique dans un plan perpendiculaire à l'axe longitudinal de la virole et de la turbomachine ; toutes les alvéoles de la structure à nid d'abeilles sont ainsi de même hauteur de manière azimutale, ce qui supprime la perturbation azimutale de l'art antérieur et permet au module d'isolation acoustique d'offrir une meilleur efficacité d'isolation acoustique ;
- la surface traitée acoustiquement est augmentée.

D'un point de vue industriel :
- la fusion du module d'isolation acoustique avec le module à couche abradable, distincts dans l'art antérieur, réduit de manière général les coûts industriels (une pièce à produire, à transporter, etc. au lieu de deux) ;
- la suppression des usinages sur la surface intérieure de l'enveloppe permet de réduire le temps de cycle de fabrication ;
- la suppression des pièces de liaisons mécaniques permet de réduire le nombre de composants à acheter, stocker et gérer (équerres, vis, rivets, rondelles, écrous, joint à l'interface entre le module d'isolation acoustique et la couche de support du matériau abradable) ;
- la fabrication du module d'isolation acoustique et plus généralement de la virole combinée est simplifiée (uniformité du matériau en nids d'abeille qui ne nécessite pas d'usinage spécifique, suppression des plis de la face externe du module d'isolation acoustique, drapage des plis simplifié) et le nombre de contrôles tridimensionnels est réduit de manière importante ;
- il n'y a plus besoin d'outillage spécifique pour la constitution et de désassemblage des liaisons, contrairement aux liaisons vissées de l'art antérieur (ex : clés dynamométriques, rallonges de clés).

En outre, la disparition des liaisons par équerres s'accompagne de la disparition des problèmes et contraintes inhérents à celles-ci : fissurations et contraintes résiduelles de traction (issues du pliage), obligation de nombreux contrôles visuels, réglage des jeux de montage (contraintes statiques), risque de balourds et des problèmes vibratoires afférents.

## Revendications

1. Procédé de fabrication d'un carter de turbomachine d'aéronef, le carter (23) comportant :
- une enveloppe annulaire (29) s'étendant autour d'un axe A ;
- un élément annulaire (24 ; 253, 254), fixé sur une surface intérieure (29a) de l'enveloppe (29), l'élément annulaire (24 ; 253, 254) comportant un corps (25) qui est en matériau à alvéoles de type **NIDA** et qui comprend une partie aval (252) présentant une première surface intérieure (25a) recouverte d'une couche de matière abradable (26), et une partie amont (251) présentant une seconde surface intérieure (25b) exempte de matière abradable, le corps (25) s'étendant de manière continue de la partie amont (251) à la partie aval (252),
le procédé de fabrication comportant :
- une étape de fabrication de l'élément annulaire (24 ; 253, 254) sous forme d'un corps annulaire continu,
- une étape de découpage du corps annulaire continu en secteurs de corps (253, 254),
- une étape de fixation des secteurs de corps (253, 254) sur la surface intérieure (29a) de l'enveloppe (29), et
- une étape de dépôt d'une couche de matière abradable (26) sur la surface intérieure (25a) de la partie aval (252) du corps (25).

2. Procédé de fabrication selon la revendication précédente, dans lequel le matériau abradable de la couche de matériau abradable (26) est une résine comportant une charge sous forme de billes creuses, de préférence une résine comportant une charge sous forme de billes creuses en verre, de préférence encore une résine époxyde chargée de microsphères creuses en verre.

3. Procédé de fabrication selon l'une des revendications précédentes, dans lequel l'étape d'installation des secteurs d'anneau sur la surface intérieure (29a) de l'enveloppe (29) comprend une étape de comblement d'interstices (30) entre les secteurs d'anneau (253, 254) par un matériau abradable de comblement (33).

4. Procédé de fabrication selon la revendication précédente, dans lequel le matériau de comblement (33) est une résine comportant une charge sous forme de billes creuses, de préférence une résine comportant une charge sous forme de billes creuses en verre, de préférence encore une résine époxyde chargée de microsphères creuses en verre.

5. Procédé de fabrication selon la revendication 3 ou 4, dans lequel le matériau abradable de comblement des interstices (30) est le même matériau abradable que le matériau composant la couche de matériau abradable (26).

6. Procédé de fabrication selon la revendication précédente, dans lequel, au niveau de la partie aval (252), la couche de matériau abradable (26) vient de corps avec le matériau de comblement (33).

7. Carter de turbomachine d'aéronef fabriqué suivant le procédé de l'une des revendications 3 à 6.

8. Carter selon la revendication précédente, dans lequel l'élément annulaire (24 ; 253, 254) est fixé par collage sur la surface intérieure (29a) de l'enveloppe (29).

9. Carter selon la revendication 7 ou 8, dans lequel la couche de matière abradable (26) est disposée dans un renfoncement (250) de la partie aval (252) du corps (25).

10. Carter selon l'une des revendications 7 à 9, dans lequel la couche abradable (26) présente une surface intérieure (26a) qui s'étend dans le prolongement axial de la seconde surface intérieure (25b).

11. Carter selon l'une des revendications 7 à 10, dans lequel un film (27) à base de fibres recouvre les première et seconde surfaces intérieures (25a, 25b) du corps (25) en matière à alvéoles, le film (27) étant lui-même recouvert par la couche de matière abradable (26) au niveau de la première surface intérieure (25a).

12. Carter selon l'une des revendications 7 à 11, dans lequel la partie aval (252) du corps (25) a une dimension axiale supérieure à celle de la partie amont (251).

13. Carter selon l'une des revendications 7 à 12, dans lequel la couche abradable (26) a une épaisseur radiale mesurée par rapport audit axe A qui représente entre 2 et 20% de l'épaisseur radiale dudit corps (25).

14. Carter selon l'une des revendications 7 à 13, dans lequel l'enveloppe (29) est réalisée dans un matériau composite comportant des fibres tissées et noyées dans une résine.

15. Carter selon l'une des revendications 7 à 14, dans lequel le nombre de secteurs du corps (25) est compris entre deux et dix.

## Patentansprüche

1. Verfahren zur Herstellung eines Gehäuses eines Flugzeug-Turbotriebwerks, wobei das Gehäuse (23) beinhaltet:
- eine ringförmige Hülle (29), die sich um eine Achse A herum erstreckt;
- ein ringförmiges Element (24; 253, 254), das an einer Innenoberfläche (29a) der Hülle (29) fixiert ist, wobei das ringförmige Element (24; 253, 254) einen Körper (25) beinhaltet, der aus einem Zellwerkstoff in der Art NIDA ist, und der einen stromabwärts befindlichen Teil (252) umfasst, der eine erste Innenoberfläche (25a) aufweist, die mit einer Schicht aus abreibbarem Material (26) bedeckt ist, und einem stromaufwärts befindlichen Teil (251), der eine zweite Innenoberfläche (25b) aufweist, die frei von abreibbarem Material ist, wobei sich der Körper (25) durchgehend vom stromaufwärts befindlichen Teil (251) zum stromabwärts befindlichen Teil (252) erstreckt,
wobei das Verfahren zur Herstellung beinhaltet:
- einen Schritt zur Herstellung des ringförmigen Elements (24; 253, 254) in Form eines durchgehenden ringförmigen Körpers,
- einen Schritt zum Schneiden des durchgehenden ringförmigen Körpers in Körpersektoren (253, 254),
- einen Schritt zum Fixieren der Körpersektoren (253, 254) auf der Innenoberfläche (29a) der Hülle (29), und
- einen Schritt zum Abscheiden einer Schicht aus abreibbarem Werkstoff (26) auf der Innenoberfläche (25a) des stromabwärts befindlichen Teils (252) des Körpers (25).

2. Verfahren zur Herstellung nach dem vorstehenden Anspruch, wobei der abreibbare Werkstoff der Schicht aus abreibbarem Werkstoff (26) ein Harz ist, das eine Ladung in Form von hohlen Kugeln beinhaltet, vorzugsweise ein Harz, das eine Ladung in Form von hohlen Glaskugeln beinhaltet, noch bevorzugt ein Epoxidharz, das mit hohlen Glas-Mikrosphären geladen ist.

3. Verfahren zur Herstellung nach einem der vorstehenden Ansprüche, wobei der Schritt zum Installieren der Ringsektoren auf der Innenoberfläche (29a) der Hülle (29) einen Schritt zum Füllen von Zwischenräumen (30) zwischen den Ringsektoren (253, 254) mit einem abreibbaren Füllwerkstoff (33) umfasst.

4. Verfahren zur Herstellung nach dem vorstehenden Anspruch, wobei der Füllwerkstoff (33) ein Harz ist, das eine Ladung in Form von hohlen Kugeln beinhaltet, vorzugsweise ein Harz, das eine Ladung in Form von hohlen Glaskugeln beinhaltet, noch bevorzugt ein Epoxidharz, das mit hohlen Glas-Mikrosphären geladen ist.

5. Verfahren zur Herstellung nach Anspruch 3 oder 4, wobei der abreibbare Füllwerkstoff der Zwischenräume (30) derselbe abreibbare Werkstoff wie der Werkstoff ist, aus dem die Schicht aus abreibbarem Werkstoff (26) besteht.

6. Verfahren zur Herstellung nach dem vorstehenden Anspruch, wobei die Schicht aus abreibbarem Werkstoff (26) im Bereich des stromabwärts befindlichen Teils (252) aus einem Stück mit dem Füllwerkstoff (33) ist.

7. Turbotriebwerksgehäuse eines Luftfahrzeugs, das gemäß dem Verfahren nach einem der Ansprüche 3 bis 6 hergestellt wird.

8. Gehäuse nach dem vorstehenden Anspruch, wobei das ringförmige Element (24; 253, 254) durch Kleben auf der Innenoberfläche (29a) der Hülle (29) fixiert ist.

9. Gehäuse nach Anspruch 7 oder 8, wobei die Schicht aus abreibbarem Material (26) in einer Aussparung (250) des stromabwärts befindlichen Teils (252) des Körpers (25) angeordnet ist.

10. Gehäuse nach einem der Ansprüche 7 bis 9, wobei die abreibbare Schicht (26) eine Innenoberfläche (26a) aufweist, die sich in der axialen Verlängerung der zweiten Innenoberfläche (25b) erstreckt.

11. Gehäuse nach einem der Ansprüche 7 bis 10, wobei eine Folie (27) auf Faserbasis die erste und zweite Innenoberfläche (25a, 25b) des Körpers (25) aus Zellwerkstoff bedeckt, wobei die Folie (27) selbst von der Schicht aus abreibbarem Material (26) im Bereich der ersten Innenoberfläche (25a) bedeckt ist.

12. Gehäuse nach einem der Ansprüche 7 bis 11, wobei der stromabwärts befindliche Teil (252) des Körpers (25) eine axiale Abmessung aufweist, die größer als jene des stromaufwärts befindlichen Teils (251) ist.

13. Gehäuse nach einem der Ansprüche 7 bis 12, wobei die abreibbare Schicht (26) eine radiale Dicke, die in Bezug auf die Achse A gemessen wird, aufweist, die zwischen 2 und 20% der radialen Dicke des Körpers (25) beträgt.

14. Gehäuse nach einem der Ansprüche 7 bis 13, wobei die Hülle (29) aus einem Verbundwerkstoff realisiert ist, die gewebte und in ein Harz getauchte Fasern beinhaltet.

15. Gehäuse nach einem der Ansprüche 7 bis 14, wobei die Anzahl an Sektoren des Körpers (25) zwischen zwei und zehn umfasst ist.

## Claims

1. A method for manufacturing an aircraft turbine engine housing, the housing (23) comprising:
- an annular shell (29) extending about an axis A;
- an annular element (24; 253, 254), attached to an inside surface (29a) of the shell (29), the annular element (24; 253, 254) comprising a body (25) which is made of a NIDA-type cellular material and which comprises a downstream portion (252) having a first inside surface (25a) covered with a layer of abradable material (26), and an upstream portion (251) having a second inside surface (25b) without abradable material, the body (25) extending continuously from the upstream portion (251) to the downstream portion (252),
the manufacturing method comprising:
- a step of manufacturing the annular element (24; 253, 254) as a continuous annular body,
- a step of cutting the continuous annular body into body segments (253, 254),
- a step of attaching the body segments (253, 254) to the inside surface (29a) of the shell (29), and
- a step of depositing a layer of abradable material (26) on the inside surface (25a) of the downstream portion (252) of the body (25).

2. The manufacturing method according to the preceding claim, wherein the abradable material of the abradable material layer (26) is a resin comprising a filler in the form of hollow beads, preferably a resin comprising a filler in the form of hollow glass beads, more preferably an epoxy resin filled with hollow glass microspheres.

3. The manufacturing method according to one of the preceding claims, wherein the step of installing the ring segments on the inside surface (29a) of the shell (29) comprises a step of filling gaps (30) between the ring segments (253, 254) with an abradable filling material (33).

4. The manufacturing method according to the preceding claim, wherein the filling material (33) is a resin comprising a filler in the form of hollow beads, preferably a resin comprising a filler in the form of hollow glass beads, more preferably an epoxy resin filled with hollow glass microspheres.

5. The manufacturing method according to claim 3 or 4, wherein the abradable filling gaps material (30) is the same abradable material as the material making up the abradable material layer (26).

6. The manufacturing method according to the preceding claim, wherein at the downstream portion (252) the abradable material layer (26) is integral with the filling material (33).

7. A housing for an aircraft turbine engine manufactured by the method of one of claims 3 to 6.

8. The housing according to the preceding claim, wherein the annular element (24; 253, 254) is attached by adhesion to the inside surface (29a) of the shell (29).

9. The housing according to claim 7 or 8, wherein the abradable material layer (26) is disposed in a recess (250) of the downstream portion (252) of the body (25).

10. The housing according to one of claims 7 to 9, wherein the abradable layer (26) has an inside surface (26a) which extends in the axial extension of the second inside surface (25b).

11. The housing according to one of claims 7 to 10, wherein a film (27) based on fibres covers the first and second inside surfaces (25a, 25b) of the body (25) made of cellular material, the film (27) itself being covered by the abradable material layer (26) at the first inside surface (25a).

12. The housing according to one of claims 7 to 11, wherein the downstream portion (252) of the body (25) has a greater axial dimension than the upstream portion (251).

13. The housing according to one of claims 7 to 12, wherein the abradable layer (26) has a radial thickness measured with respect to said axis A which is between 2 and 20 % of the radial thickness of said body (25).

14. The housing according to any one of claims 7 to 13, wherein the shell (29) is made of a composite material comprising woven fibres embedded in a resin.

15. The housing according to one of claims 7 to 14, wherein the number of segments of the body (25) is between two and ten.
